# EUROPEAN PATENT APPLICATION

(11) **EP 1 220 556 A1**
(43) Date of publication of application: **03.07.2002**
(21) Application number: 01310889.9
(22) Date of filing: 24.12.2001
(51) Int. Cl.: H04Q 7/32

(54) **Remote disabling of a mobile phone device**

(30) Priority: 28.12.2000 JP 2000402479
(71) Applicant: Nokia Corporation, 02150 Espoo (FI)
(72) Inventor: Patel, Inderjit, c/o Nokia Japan Co Ltd, Tokyo (JP); Sato, Shunya, c/o Nokia Japan Co Ltd, Tokyo (JP); Green, Nerissa, c/o Nokia Japan Co Ltd, Tokyo (JP); Butler, Tony, c/o Nokia Japan Co Ltd, Tokyo (JP); Asztalos, Balazs, c/o Nokia Japan Co Ltd, Tokyo (JP)
(74) Representative: Style, Kelda Camilla Karen

(57) **Abstract**

A mobile phone device (53) able to transmit and receive signals on a communication enterpriser (40) side and memorize and store a personal information data kind within the device is constructed by including loss information detecting means for detecting a message or a command transmitted by the communication enterpriser (40) side on the basis of loss notification performed from an original device possessor (30) to the communication enterpriser (40) side, device lock means for executing taking-out inhibition of the information data kind stored to the device or the stoppage of a talking operation of the device on the basis of this loss information detecting means, and lock confirmation response means for notifying the execution of the device lock performed by this device lock means to the communication enterpriser (40) side.

## Description

### BACKGROUND OF THE INVENTION

### 1.Field of the Invention

The present invention relates to a device having a security function of inhibiting an unauthorized use when a mobile communication device such as a mobile phone device, etc. is placed in a position separated from an original possessor's hand due to loss, theft, mislaying, etc.

In this specification, the present invention is mainly described with respect to the mobile phone device, but is not limited to this. An electronic apparatus such as a two-way radio, an information terminal unit, a portable personal computer, various kinds of mobile communication terminals, etc. is also included in a technical field of the present invention if this electronic apparatus is able to store personal information data, etc. in itself.

### 2.Descrirtion of the Prior Art

In recent years, much personal information is stored in a mobile communication device such as a mobile phone device, a portable type information terminal unit, etc., and this mobile communication device is carried, and such a tendency is increased more and more. However, various problems are caused when such a mobile phone device, etc. is separated from a possessor due to loss, theft, mislaying, etc. In this case, it is first necessary to prevent outflow and loss of the personal information data, etc. stored to the device, and reliably return these data and the device to the original possessor of the device . However, there was no effective means for communicating with the mobile phone device lost in such a case and taking a measure, etc.

In the theft and the loss of the mobile phone device, the following wishes are required from the device possessor to protect security.
(a) When the mobile phone device is stolen and stores much personal information thereinto, these personal information should not be flowed out to the exterior and secrecy must be kept.
(b) When the mobile phone device is stolen, it must be prevented that a phone call is made by using this mobile phone device.
(c) When the mobile phone device is lost, it is preferable that a person finding this mobile phone device can easily understand where this mobile phone device should be returned by a message, etc.
(d) When the mobile phone device is stolen or lost, a warning is emitted and notified to persons around the mobile phone device by a beep note, a message notice, etc. Thus, someone might find this mobile phone device.

Further, the following measures were proposed as conventional coping methods.
(a) The possessor asks a communication enterpriser to cancel a telephone number of the mobile phone device such that someone does not unfairly use this mobile phone device, and this mobile phone device cannot be used.
(b) Since the mobile phone device has a function for manually security-locking the device by inputting a personal ID number, the possessor practically uses this function and uses the device while the possessor often security-locks the device.

However, there were the following problems in the prior art.
- The communication enterpriser can prevent someone from using this mobile phone device by canceling the telephone number of the mobile phone device. However, since the personal information data are left in this mobile phone device and can be effectively practically used even now, there is a possibility that these personal information data are taken out.
- No possessors almost use the security lock function of the mobile phone device since this function is complicated and inconvenient. A key guard function is often used instead of the security lock function. Therefore, after this mobile phone device is stolen and lost, there is no measure for operating the security lock function.
- No warning using a beep sound is useful so much now.
- The request that the information data stored and held in the mobile phone device must be secretly held tends to be increased more and more.

In view of the above problems of the conventional device, an object of the present invention is to provide a mobile phone device which mounts a new remote lock function not provided by a security lock mechanism set by the possessor as in the conventional device, and has a remote security function able to reliably and simply prevent a third person from using the mobile phone device without any allowance of the possessor of the mobile phone device and getting access to the personal information (personal data) and illegally using the mobile phone device.

### SUMMARY OF THE INVENTION

To solve the above problems, the mobile phone device in the present invention uses the following means.
(1) A mobile phone device able to transmit and receive signals on a communication enterpriser side, and memorize and store personal information data, etc. within the device is constructed by including loss information detecting means for detecting a message or a command transmitted by the communication enterpriser side on the basis of loss notification performed from an original device possessor to the communication enterpriser side, device lock means for executing the taking-out inhibition of an information data kind stored to the device or the stoppage of a talking operation of the device on the basis of this loss information detecting means, and lock confirmation response means for notifying the execution of the device lock performed by this device lock means to the communication enterpriser side.
(2) In this mobile phone device, an operation of said device lock means is executed by accompanying a message display or the generation of a warning sound on a mobile phone device side.
(3) In this mobile phone device, a lock operation of said lock confirmation response means is executed by accompanying a message display or the generation of a warning sound on the communication enterpriser side.
(4) In these mobile phone devices , the mobile phone device has two separate channels of a voice channel and a data channel, and said loss information detecting means and said lock confirmation response means are constructed such that signals are transmitted and received through this data channel.

### BRIEF DESCRIPTION OF THE DRAWINGS

Fig. 1 is a block diagram showing the construction of a cooperation relation including a mobile phone device and a device possessor-a communication enterpriser device in the present invention.
Fig. 2 is a flow chart showing a flow of the embodiment of a device lock function of the mobile phone device in the present invention.
Fig. 3 is an explanatory view showing transmission and reception of messages, commands, etc, accompanied by the embodiment of the device lock function of the mobile phone device in the present invention.

### DETAILED DESCRIPTION OF THE PREFERRED EMBODIMENT

The embodiment modes of a mobile phone device in the present invention will next be explained in detail with reference to the accompanying drawings.

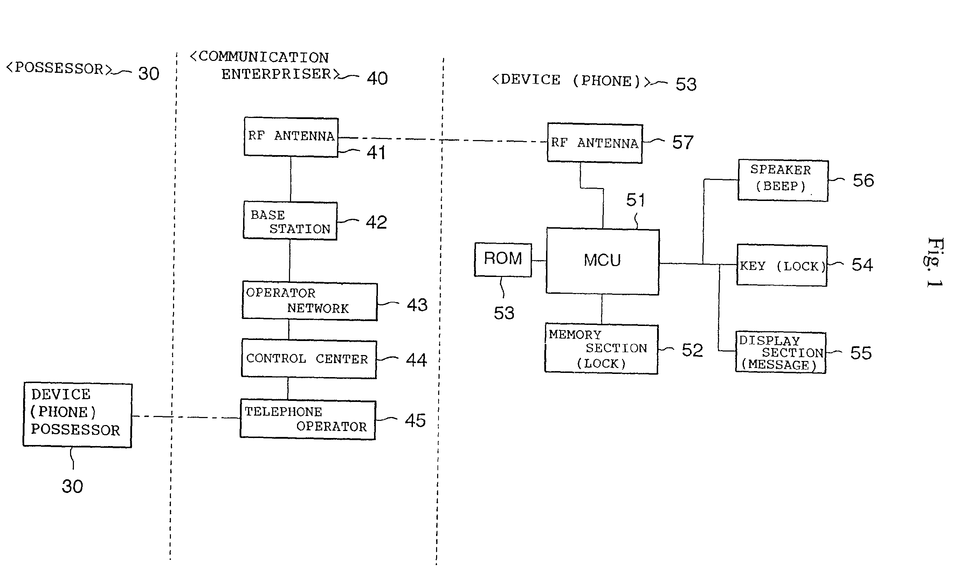

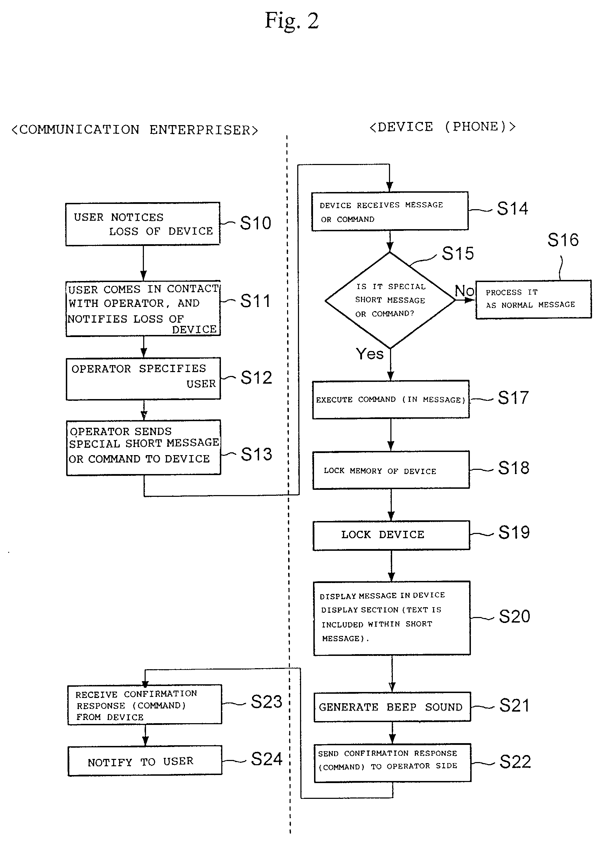

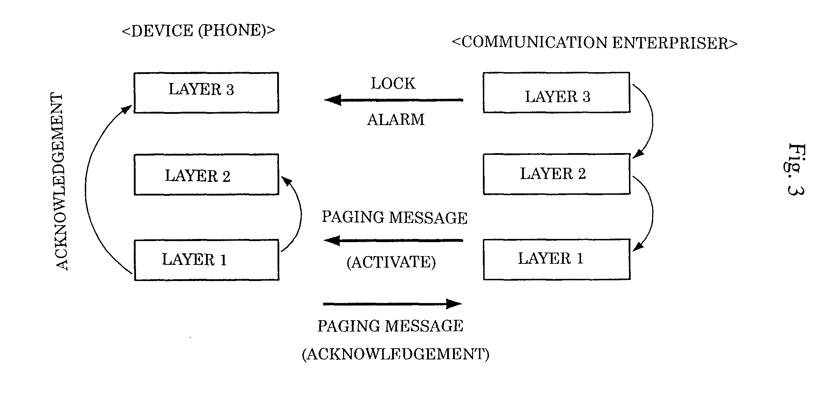

Fig. 1 is a block diagram showing the construction of a cooperation relation including a mobile phone device and a device possessor-a communication enterpriser in the present invention. Fig. 2 is a flow chart showing a flow of the execution of a lock function of the mobile phone device in the present invention. Fig. 3 is an explanatory view showing transmission and reception of messages, commands, etc, accompanied by the lock function. The communication enterpriser of the present invention is an operating side of mobile communication such as a base station, a communication connecting trader, etc.

In accordance with the mobile phone device of the present invention, the following features are provided.
- An original possessor of the mobile phone device (mobile terminal) can ask the communication enterpriser to transmit commands for preventing an unfair use of the mobile phone device.
- When a certain mobile phone device (mobile terminal) receives a report of loss of this mobile phone device from the communication enterpriser, talking stoppage and a memory protecting function of this device are remotely started so that the use of this device is stopped.
- A short message or a command of a special type is transmitted to this mobile phone device by the communication enterpriser.
- When this mobile phone device receives this short message or command of the special type, the mobile phone device locks amemory and a UI (user interface) and the message can be displayed in a display.
- This special message can be also set such that a warning is emitted by accompanying an alarm sound, a beep sound, etc.
- This mobile phone device automatically transmits a confirmation affirmative response (acknowledgement) to the communication enterpriser.

The mobile phone device of the present invention is used and embodied in the relation of "possessor 30 · communication enterpriser 40 · device (phone) 50" as shown in Fig. 1.

Here, <possessor 30> is a possessor of the mobile phone device (phone), and is shown by a device (phone) possessor 31.

<Communication enterpriser 40> is constructed by including an RF antenna 41, a base station 42, a communication enterpriser network 43, a control center 44 and a telephone operator 45 (may be set to a person and a device) as one constructional example of the communication enterpriser.

<Device (phone) 50 > is the mobile phone device (including whole portable communication devices) possessed by the possessor 30 as one constructional example of the device. The device (phone) 50 is constructed by including an MCU 51 (a control section of the entire device including a memory control unit), a memory section 52 (able to memorize and store information such as personal data, etc. and constructed by a freely writable and erasable RAM, etc. ) , a ROM 53 (stores a program of the device, etc.), a key operating section 54, a display section 55 (using an LCD, etc.), a speaker 56 and the RF antenna 41 (wirelessly transmitting and receiving signals in mobile communication).

In accordance with the entire construction as shown in Fig. 1, the mobile phone device of the present invention can transmit and receive signals with respect to the communication enterpriser side 40, and can memorize and store a kind of personal information data within the memory section 52 of the device 50. The communication enterpriser side 40 transmits a message or a command transmitted through the RF antenna 41 on the basis of the communication of loss, theft, etc. carried out from the original device possessor 30 to the communication enterpriser side 40. The device 50 has a loss information detecting means for detecting this transmitted message or command through an RF antenna 57. The mobile phone device is constructed by arranging a device lock means for executing taking-out inhibition (locking the memory section 52) of the information data kind stored to the device, or stoppage of a talking operation of the device on the basis of this loss information detecting means, and a lock confirmation response means for notifying the execution of the device lock to the communication enterpriser side 40 by this device lock means.

Further, the operation and the execution of each of the loss information detecting means, the device lock means and the lock confirmation response means are controlled by the device MCU 51. These means cannot be normally operated when a power source of the device is turned off. Therefore, the mobile phone device can be set to a special set device so as to be operated even when the power source of the device is turned off.

The device lock means in this mobile phone device 50 are preferably operated and executed by displaying the message (a screen display in the display section 55) on a side of the mobile phone device 50 and generating a warning sound (an alarm function is operated by ringing a beep sound, etc. by the speaker 56).

A lock operation of the lock confirmation response means in this mobile phone device is preferably executed by accompanying the message display or the generation of the warning sound on the side of the communication enterpriser 40.

A flow for embodying the lock function of the mobile phone device in the present invention is divided into two sides constructed by <communication enterpriser side> and <device (phone) side> and is shown as follows in accordance with Fig. 2.

<Communication enterpriser side> The user 30 (possessor 30) notices loss of the device (phone) 50 (step S10). → The user 30 comes in contact (communication) with an operator 45 (is not limited to a person, but may be also set to a device), and notifies the loss of the device 50 (step S11). → The operator 45 then specifies the user 30 (step S12). → The operator 45 takes a procedure for transmitting a special short message or a command to the device 50 (step S13).

Then, it proceeds to <device (phone) side> and the flow is advanced.

The device 50 receives the special short message or the command (step S14). → The device 50 judges whether it is the special short message or the command transmitted when the original possessor 30 has lost the device (step S15). If this judgment is No, this message or command is processed as a normal message (step S16).

In contrast to this, if the judgment is Yes, the command (there is also a case in which this command is included in the message) is executed (step S17). → The memory section 52 of the device 50 is then locked (step S18). → The device 50 is locked (step S19). → The message is displayed in the display section 55 of the device 50. At this time, a text is preferably set to be included in the short message (step S19). → The beep sound is rung and the alarm function is executed (step S20). → A confirmation response (command) is transmitted to the operator 45.

Then, it is returned to <communication enterpriser side> . → The confirmation response (command) from the device 50 is received (step S23). → This reception is notified to the user (step S24). Thus, the series of flows has been executed.

The mobile phone device of the present invention has two channels constructed by a voice channel and a data channel (input data channel). The former voice channel is a channel for inputting information spoken by using a microphone to the phone device. The latter data channel is a channel for inputting information to the phone device by a key or other mechanical input means. The data channel can transmit and receive a technical display using characters, numerals, symbols, graph elements, etc. The information inputted by this data channel can be variously used, and can be also monitored and displayed in the display section mounted to the device by transmitting and receiving the short message, the test, etc. Therefore, the mobile phone device of the present invention is preferably constructed such that the short message, the text and the command are transmitted and received through this data channel.

In the mobile phone device in the present invention, it is preferable to adopt the layer structure of a seven-stage layer model of OSI, and transmit and receive a message and a command with respect to communication control by practically using a layer 3 (a control function via a network layer and a relay node), a layer 2 (a control function between a data link layer and an adjacent node), and a layer 1 (a function for setting a physical layer and an electromechanical condition) as lower three layers concerned in a transmitting function.

Fig. 3 is an explanatory view showing transmission and reception of a message and a command response, etc. accompanied by the embodiment of the lock function of the mobile phone device in the present invention.

The side of the communication enterpriser 40 preferably transmits a command for executing the lock or the alarm to the device side via the data channel through the layer 3. A paging message is transmitted from the communication enterpriser side 40 to the display section 55 of the device 50 so as to display the message. The side of the device 50 transmits the command of a confirmation response (acknowledgement) to this paging message, and makes the response.

Thus, in accordance with the mobile phone device of the present invention, the following excellent effects are shown. Namely, the mobile phone device with a security function of high reliability operated by the communication enterpriser in remote control can be easily realized by a very simple construction using cheap device and system. It is possible to effectively and reliably prevent a third person from using the phone device without any allowance of the possessor of the phone device, and getting access to personal information (personal data).

## Claims

1. A mobile phone device able to transmit and receive signals on a communication enterpriser side and store information data in the device, comprising:
loss information detecting means for detecting a message or a command transmitted by the communication enterpriser side on the basis of loss notification provided by an original device possessor to the communication enterpriser side;
device lock means for performing taking-out inhibition of said information data stored in the device or the stoppage of a talking operation of the device on the basis of said loss information detecting means; and
lock confirmation response means for notifying that the device is locked by said device lock means to the communication enterpriser side.

2. A mobile phone device according to claim 1, wherein said device lock means is operated by accompanying a message display or the generation of a warning sound on the mobile phone device side.

3. A mobile phone device according to claim 1, wherein said lock confirmation response means is operated by accompanying a message display or the generation of a warning sound on the communication enterpriser side.

4. A mobile phone device according to any one of claims 1 to 3, wherein said mobile phone device has two channels of a voice channel and a data channel, and said loss information detecting means and said lock confirmation response means are constructed such that signals are transmitted and received through said data channel.
